# EUROPEAN PATENT APPLICATION

(11) **EP 1 339 024 A2**
(43) Date of publication of application: **27.08.2003**
(21) Application number: 03002732.0
(22) Date of filing: 06.02.2003
(51) Int. Cl.: G07C 9/00, E05B 19/00

(54) **Procedure and device for managing requests for copies of keys**

(30) Priority: 20.02.2002 IT MI20020341
(71) Applicant: ISEO SERRATURE S.p.A., 25055 Pisogne (Brescia) (IT)
(72) Inventor: Grazzini, Luca, 25040 Monticelli Brusate, (Brescia) (IT)
(74) Representative: Rapisardi, Mariacristina

(57) **Abstract**

The procedure for managing requests for copies of keys from an end user consists of associating a first code with each key sold and, moreover, associating a second code with each user who has bought said key so that, when the user asks for a copy of a key, he has to provide the first and second code which are checked by a manager and, in the case in which the manager recognises said first and second codes, it provides said copy of the key to the user.

The device for managing requests for copies of keys comprises a first processor holding a database in which the data relative at least to the users, to a first code associated with said key and to a second code associated with said user and to a profile or characteristics of each key is memorised, a plurality of second electronic processors suitable for receiving the information from said first electronic processor to be communicated to processing machines.

## Description

The present invention refers to a procedure and device for managing requests for copies of keys.

The problem of the copying of keys has always been very inconvenient since, to increase security, increasingly strong locks which are protected against possible attempts to break them have tended to be made.

Nevertheless, however much the lock may be protected, dishonest people often temporarily got their hands on a key and managed to make copies with which they could enter buildings which are locked.

To avoid this problem keys were made with which an identifying card was associated carrying a code on it. To make a copy of the key it was necessary to provide the copier with both the key (obviously) and the identifying card which allowed him to check the legitimacy of the copying of the key.

Then such procedures were improved introducing keys onto the market the blanks of which (i.e. the key without coding) was not freely available on the market, but had to necessarily be bought from the producer.

It is clear that in this way a high degree of security was reached in the prevention of dishonest copying of keys, however also with these procedures there is the risk that unauthorised copies of keys be made.

Indeed, it is possible that a copier, in possession of the blanks provided by the producer, might make copies of keys even without the identifying card with the code on it.

Moreover, neither the user nor the producer can be certain of what.has happened to the key.

In particular, the producer is not able to guarantee that, even if in a certain area blanks of a certain type of key. have not been sold, it has not actually been copied.

The user, on the other hand, cannot guarantee to a possible buyer of an apartment or building in general closed by a lock which uses the key provided with an identifying card with a code that the key has been copied and that, perhaps, he himself is in possession of a copy of the key or else that he cannot make other keys at a later date.

The technical task proposed of the present invention is, therefore, that of realising a procedure and device for managing requests for copies of keys which allows the aforementioned technical drawbacks of the prior art to be eliminated.

In this technical task a purpose of the invention is that of realising a procedure and a device which prevent a copier in possession of the blanks of a key from being able to make unauthorised copies.

Another purpose of the invention is that of realising a procedure and a device which allow the history of the key to be known, in the sense of being able to work out how many copies have been made, to whom and where there were provided, etc.

Yet another purpose of the invention is that of realising a procedure and a device which allow the information for copying a key remotely to be obtained.

The last but not least purpose of the invention is that of realising a procedure and a device which allow producers to be able to guarantee that a particular key has not been copied and which allow users to ensure that other keys cannot be made after having sold a building closed by a lock provided with a key.

The technical task, as well as these and other purposes, according to the present invention are achieved by realising a procedure for managing requests for copies of keys from an end user, characterised in that it consists of associating a first code with each key sold and, moreover, associating a second code with each user who has bought said key so that, when the user asks for a copy of a key, he has to provide the first and second code which are checked by a manager and, in the case in which the manager recognises said first and second codes, it provides said copy of the key to the user.

Suitably, the present finding also refers to a device for managing requests for copies of keys, characterised in that it comprises a first processor holding a database in which the data relative at least to the users, to a first code associated with said key and to a second code associated with said user and to a profile or characteristics of each key is memorised, a plurality of second electronic processors suitable for receiving the information from said first electronic processor to be communicated to processing machines.

Other characteristics of the present invention are, moreover, defined in the other claims.

Further characteristics and advantages of the invention shall become clearer from the description of a preferred but not exclusive embodiment of the procedure and of the device according to the finding, illustrated for indicating and not limiting purposes in the attached drawings, in which:

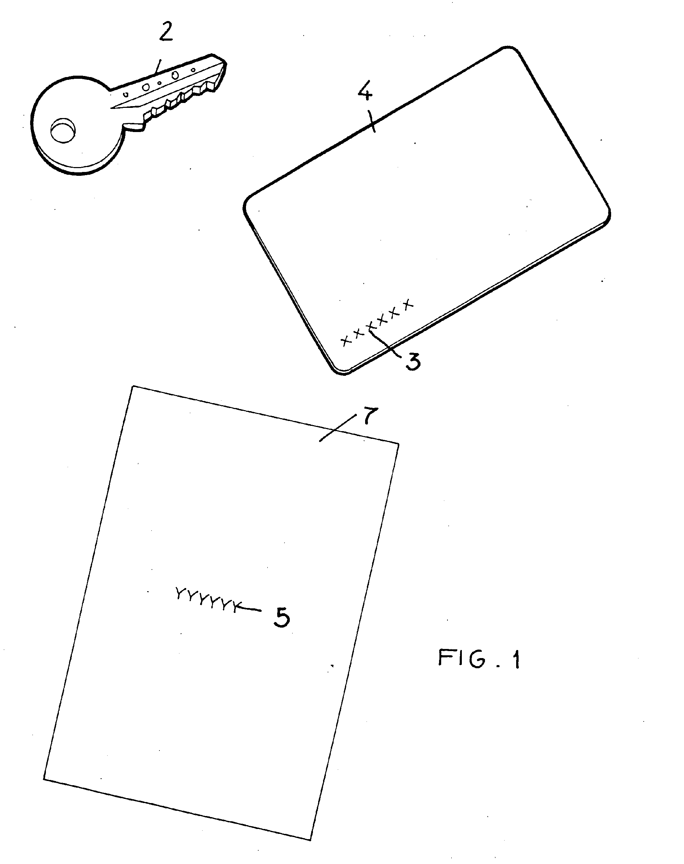

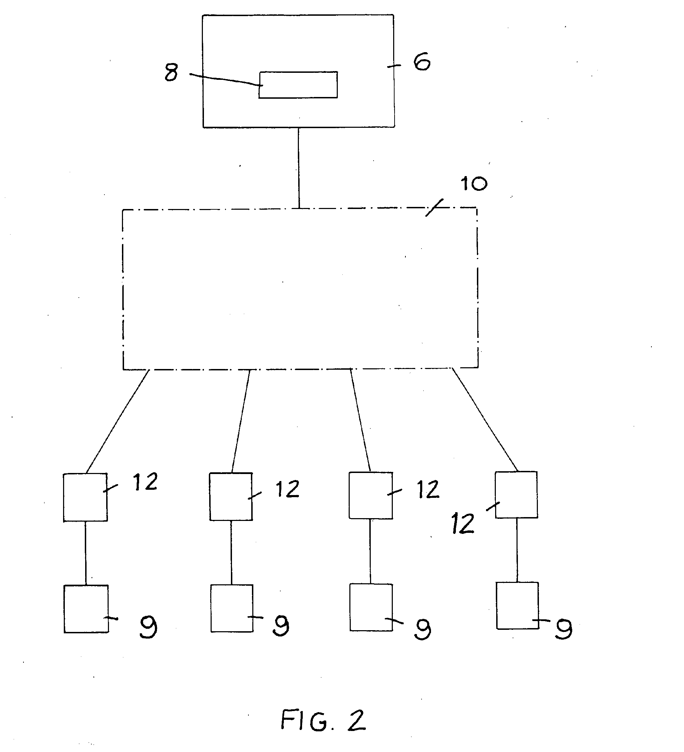

- figures 1 and 2 show a schematic view of the device and of the procedure according to the finding.

With reference to the quoted figures, a procedure for managing requests for copies of keys from end users is represented. Preferably, the key is of the type which is difficult to reproduce with multiple combinations and it is under patent protection, so that the reproduction and commercialisation thereof is possible for the owner alone.

The procedure consists of associating a first code 3, usually printed on an identifying card 4, with each key 2 sold.

Moreover, the procedure foresees associating a second code 5 or PIN with each user who has bought the key 2, said code being provided for the user directly by a manager 6 of the distribution of copies of keys 2 for example through a letter 7 sent by conventional mail or other equivalent systems.

In this way, when a user asks for a copy of a key 2, he must provide the first and second code 3, 5 which are checked by the manager 6 and, in the case in which the manager 6 recognises the first and second code 3, 5, it provides the copy of the key 2 to the user.

Preferably, after the manager 6 has checked that the first and second code 3, 5 are correct, the information relative to the key is collected and transmitted to a processing machine.

In particular, the manager communicates the information to a second electronic processor 12.

The information is then translated into a language which can be read by the processing machine. In the case of an automatic processing machine it is carried out directly by the second electronic processor which commands the production of the copy of the key 2.

On the other hand, in the case in which the processing machine is controlled manually, the translation is carried out by an operator who reads the commands on the second processor and programs the processing machine to produce the copy of the key 2.

Advantageously, the numerous processing machines 9 and the second electronic processors 12 are arranged in a remote position with respect to the database 8 and, in any case, are spread all over the country. The connection with the manager 6 is advantageously realised through the internet 10 or intranet.

Suitably, the database 8 contains information relative at least to the user (e.g. name, address, etc.), to the first and second code 3, 5, and to the profile or characteristics of the copy of the key 2 to be realised.

Moreover, advantageously, in the database 8 the information relative to each reproduction of the copies of keys 2 is memorised.

For example, the users who are given the copy of the key 2, the place and the date where the copy is made, etc. are memorised.

In this way the history of the key is always perfectly known and, in particular, the number of copies made, for whom and by whom they were made is known.

This allows the producer to have control of the copies which are made since he is able to work out who has made copies and how many copies he has made and, moreover, he knows to whom and how many blanks he has supplied in his shops.

Therefore, a copier will not be able to make exaggerated and inexplicable requests for blanks of keys.

Moreover, for each reproduction operation of copies of keys 2 the manager 6 sends the user notification of the reproduction.

This constitutes a further check which further increases the security against unauthorised copies of keys being made.

The procedure comprises an initial registration step in which the data of the user is inserted in the database 8 and in which the second code 5 is associated with the user.

The second code 5 is then transmitted to the user by letter 7 or in another way.

Advantageously, during the registration step the user can request one or more copies of keys 2.

Indeed, it is just during the course of such a step that the second code is assigned to the user. Said second code must, moreover, again be transmitted to the user (for example it is sent to him by letter or another means).

Moreover, advantageously, the second processors 12 are able to connect with the manager 6 to use software programs for example to develop special key systems.

In particular, by special key systems we mean those systems in which some keys are able to open numerous different locks (applied, for example, to different doors of an office or apartment) and other keys only some doors (for example an employee can only open his own office and the manager can open all of the doors of the office).

Programs of this type are very expensive and in some cases are not used in the development of special key systems.

Accordingly, the resulting special key systems can be very poor in quality and it can be very difficult to intervene on them to change them or develop them.

By using the management program, on the other hand, not only are good quality special key systems created, but the manager is always in full knowledge of the key system made and is able to intervene on it to develop it or change it even a long time after it has been made, for example after the person who made it has gone out of business or at least is no longer able to intervene on it.

The present finding also refers to a device for managing requests for copies of keys.

The device according to the finding 10 comprises a first processor holding a database 8 in which the data relative at least to the users, to a first code 3 associated with the key 2 and to a second code 5 associated with the user and to a profile or characteristics of each key 2 is memorised, a plurality of second electronic processors 12 suitable at least for receiving the information from said first electronic processor to be communicated to processing machines.

In a first example the second electronic processor is connected to the processing machine and takes care of translating the commands and transferring them directly to the processing machine.

In a second example, the second processor 12 translates and visualises the commands which are set by an operator who reads the commands on the second electronic processor 12 and programs the processing machine of the type which is controlled manually.

The operation of the device according to the invention is clear from that which has been described and illustrated and, in particular, is substantially the following.

In particular, two modes are possible. In the first all of the operations are carried out via telephone, email, conventional SMS, etc. In the second the operations are carried out through an agent of the manager via electronic processor.

In the first mode the user who has bought a lock cylinder contacts the manager and communicates his data so that the manager can insert it in his database 8 and can generate the second code 5 relative to that user. Before the end of the registration step the user can request one or more copies of the key.

Then the manager 6 sends the second code 5 to the user through conventional mail.

To obtain copies of a key 2, the user must telephone the manager 6 and must provide both the first code 3 (printed on the identifying card) and the second code 5.

Then the manager collects the information relative to the coding of the particular key from the database 8 and takes care of producing the key from the blank.

Finally, the key is sent to the user.

In the second case, i.e. when the copy of the key is requested from an agent of the manager 6, the registration step takes place substantially as indicated previously with the difference that the information is transferred to the manager through the agent himself. Also in this case it is possible to make one or more copies of the key 2 before the registration step has ended. When the user needs a copy of a key and goes to an agent, however, the information relative to the first code 3 and to the second code 5 must be given to the agent who transmits them to the manager.

He collects the information necessary to realise the coding on the blank of the key from the database 8 and transmits them to the agent through electronic processor, preferably through the internet.

Advantageously, the agent is provided with a processing machine which can be commanded directly with the information coming in from the manager 6, so that he can realise the coding of the key and provide the copy of the key 2 for the user in real time.

Besides the two main modes a third mode is possible, in which the user carries out the operations which he needs at a secondary agent who communicates with a main agent who is in direct communication with the manager.

It is clear that neither the procedure nor the device undergo substantial changes in this case.

In practice, it has been noted how the procedure and the device according to the invention are particularly advantageous because they allow the unauthorised making of copies of keys to be prevented. At the same time, however, they allow the client to be guaranteed that in the case in which the first or second code are lost (i.e. the identifying card or the PIN gets lost) it is possible to replace it.

According to conventional procedures, on the other hand, it was no longer possible to obtain a copy of the key.

Moreover, the user can modify the second code or PIN as he wishes. This can prove useful, for example, in the case of sale of an apartment or the like.

Indeed, in this case the manager can guarantee to the client that copies of the key have not been made and the client can, after having bought the apartment, modify the second code or PIN so as to be sure of being the only one able to make a copy of the key.

The procedure and device for managing requests for copies of keys thus conceived are susceptible to numerous modifications and variants, all of which are covered by the inventive concept. Moreover, all of the details can be replaced by technically equivalent elements.

In practice, the materials used, as well as the sizes, can be whatever according to requirements and the state of the art.

## Claims

1. Procedure for managing requests for copies of keys from an end user, **characterised in that** it consists of associating a first code with each key sold and, moreover, associating a second code with each user who has bought said key so that, when the user asks for a copy of a key, he has to provide the first and second code which are checked by a manager and, in the case in which the manager recognises said first and second codes, it provides said copy of the key to the user.

2. Procedure according to claim 1, **characterised in that** after the manager has checked that the first and second code are correct, the information relative to said key to be copied is collected from a database and is communicated to a processing machine to command the production of said copy of a key.

3. Procedure according to one or more of the previous claims, **characterised in that** said processing machine is arranged in a remote position with respect to the database.

4. Procedure according to one or more of the previous claims, **characterised in that** said database is connected to a plurality of processing machines, in any case spread all over the country, through the internet or intranet.

5. Procedure according to one or more of the previous claims, **characterised in that** said database contains information relative at least to the user, to the first and second code and to the profile or characteristics of the copy of the key to be made.

6. Procedure according to one or more of the previous claims, **characterised in that** the information relative to each reproduction operation of said copies of keys is memorised in said database.

7. Procedure according to one or more of the previous claims, **characterised in that** for each reproduction operation of copies of keys said manager sends notification to said user that the reproduction has taken place.

8. Procedure according to one or more of the previous claims, **characterised in that** it comprises an initial registration step in which the data of said user is inserted in said database and in which said second code is associated with said user, said second code then being transmitted to said user.

9. Procedure according to one or more of the previous claims, **characterised in that** during said registration step said user can request one or more of said copies of keys.

10. Procedure according to one or more of the previous claims, **characterised in that** said second electronic processors are able to connect with said manager in particular to use programs or software to develop special key systems.

11. Device for managing requests for copies of keys, **characterised in that** it comprises a first processor holding a database in which the data relative at least to the users, to a first code associated with said key and to a second code associated with said user and to a profile or characteristics of each key is memorised, a plurality of second electronic processors suitable for receiving the information from said first electronic processor to be communicated to processing machines.

12. Procedure and device for managing requests for copies of keys, all as described, represented in the attached tables of drawings and claimed.
